(19) Europäisches Patentamt

European Patent Office

Office européen des brevets

(11) Veröffentlichungsnummer: **0 240 759**

**A2**

(12) **EUROPÄISCHE PATENTANMELDUNG**

(21) Anmeldenummer: **87103471.6**

(22) Anmeldetag: **11.03.87**

(51) Int. Cl.⁴: **B23B 51/04**

(30) Priorität: **09.04.86 DE 3611999**

(43) Veröffentlichungstag der Anmeldung:
**14.10.87 Patentblatt 87/42**

(84) Benannte Vertragsstaaten:
**CH DE ES FR GB IT LI SE**

(71) Anmelder: **Firma Gottlieb Gühring**
**Herderstrasse 50-54**
**D-7470 Albstadt 1-Ebingen(DE)**

(72) Erfinder: **Reinauer, Josef**
**Weidenweg 23**
**D-7480 Sigmaringen 3(DE)**
Erfinder: **Kuhl, Hans Günter**
**Kopsbühl 82**
**D-7730 Villigen-Schwenningen(DE)**

(74) Vertreter: **Winter, Konrad Theodor, Dipl.-Ing.**
**et al**
**Patentanwaltsbüro Tiedtke- Bühling- Kinne-**
**Grupe- Pellmann- Grams- Struif- Winter-**
**Roth Bavariaring 4**
**D-8000 München 2(DE)**

(54) **Zwei- oder mehrschneidiges Bohrwerkzeug mit austauschbaren Schneidelementen.**

㊗ Ein zwei-oder mehrschneidiges Bohrwerkzeug ist mit austauschbaren Schneidelementen versehen. Die Schneidelemente sind mit Schrauben in in der Bohrerspitze entsprechend ausgebildeten Ausnehmungen befestigt. Die Schneidelemente sind als Wechselplatten ausgebildet und in Schneidrichtung hinter der Hauptschneide mit Befestigungsabschnitten versehen, durch die hindurch die Schrauben mit in der Stirnseite der Bohrerspitze ausgebildeten Gewindebohrungen in Eingriff sind.

Fig.5

## Zwei-oder mehrschneidiges Bohrwerkzeug mit austauschbaren Schneidelementen

Die Erfindung bezieht sich auf ein zwei-oder mehrschneidiges Bohrwerkzeug mit austauschbaren Schneidelementen nach dem Oberbegriff des Patentanspruchs 1.

Es sind Bohrwerkzeuge bekannt, an deren Bohrerspitzen austauschbare Wendeplatten befestigt werden, an denen die Hauptschneiden ausgebildet sind. Diese werden an der Bohrerspitze durch Schrauben befestigt, deren Achsen etwa in einer Radialebene der Bohrerspitze liegen und die die Wendeplatten etwa mittig durchgreifen.

Durch diese Art der Befestigung weist die Wendeplatte in Vorschubrichtung des Bohrwerkzeugs eine vergleichsweise große Länge auf, wodurch sich Störungen beim Abtransport der Späne ergeben können. Stand der Technik bei solche bekannten Wendeplatten-Bohrwerkzeugen ist die asymetrische Anordnung einer, zweier oder mehrerer Wendeplatten, wodurch eine Schnittaufteilung des gesamten zu zerspanenden Querschnittschnittes praktiziert wird. Infolge dieser Schnittaufteilung ist eine Selbstzentrierung und Eigenführung des Bohrwerkzeugs ausgeschlossen. Dies hat zur Folge, daß solche Bohrwerkzeuge üblicherweise nur für Bohrtiefen bis zum dreifachen (in Ausnahmefällen bis zum fünffachen) des Bohrwerkzeugdurchmessers einsetzbar sind. Es stellt immer nur eine Schneide den Bohrdurchmesser her.

Aufgrund der großen Baulänge in Vorschubrichtung unter - 0° Spanwinkel sind die Möglichkeiten der Spanbildung durch entsprechend wählbare Geometrien nur in unzureichend engen Grenzen möglich, wodurch nur in seltenen Fällen ideale Voraussetzungen bezüglich Schneidengeometrie für einen entsprechend zu bearbeitenden Werkstoff vorliegen.

Der Erfindung liegt die Aufgabe zugrunde, die gattungsgemäße Konzeption des Bohrwerkzeugs derart weiterzubilden, daß durch symmetrische Anordnung zweier oder mehrerer Schneidelemente eine Selbstzentrierung und Eigenführung des Bohrwerkzeugs erreicht wird, wodurch größere Bohrtiefen bei gleichzeitiger Steigerung der Bohrungsqualität möglich sind.

Diese Aufgabe wird erfindungsgemäß mit den Merkmalen im kennzeichnenden Teil des neuen Hauptanspruchs gelöst. Die Anordnung der Gewindebohrung in der Stirnseite des Bohrerstegs erleichtert zum einen deren Herstellung in der Bohrerspitze und gewährleistet zum anderen eine freiere Gestaltung der Schneidelemente. Die Schneidelemente sind in ihrer den Schneidvorgang beeinflussenden Geometrie nahezu unbeschränkt gestaltbar, wodurch insbesondere für den Querschneidenbereich Verbesserungen möglich sind; diese können bis an den Mittelpunkt des Bohrerkerns verlaufen, ohne hierdurch die Standzeit oder die Belastbarkeit des Bohrers herabzusetzen. Letztlich wird diese freie Gestaltung der Schneiden dadurch erreicht, daß die Haupterstreckung der Wechselplatte im Gegensatz zum bekannten Stand der Technik in einer Radialebene des Bohrwerkzeugs verläuft.

Infolge der symmetrischen Ausbildung mehrerer an der Bohrerspitze angebrachter Schneidelemente gemäß Patentanspruch 2 ist das Bohrwerkzeug selbstzentrierend und selbstführend, wodurch vergleichsweise große Bohrtiefen möglich sind, die bis zum zehnfachen des Durchmessers des Bohrwerkzeugs betragen können. Des weiteren ergibt sich aus der symmetrischen Gestaltung eine symmetrische Belastung des Bohrwerkzeugs, was zu einer hohen Bohrungsqualität hinsichtlich der Durchmessergenauigkeit und der Oberflächenbeschaffenheit führt. Zur optimalen Spanabführung ist nahezu jede Geometrie der Schneidelemente (positive Spanwinkel, Spanleitstufen, Spanteilnuten) möglich. Die Geometrie ist an den zu bearbeitenden Werkstoff anpaßbar. Infolge der symmetrischen Anordnung lassen sich für das Bohrwerkzeug hohe Vorschubgeschwindigkeiten realisieren. Die Schneidelemente sind ausreichend häufig nachschleifbar, insbesondere wenn verschleißfeste Werkstoffe, wie beispielsweise Hartmetall oder dergleichen Anwendung finden.

Die Ausbildung der Befestigungsabschnitte gemäß einem der Ansprüche 3 bis 7 erleichtert zum einen die Ausrichtung des Schneidelements an der Bohrerspitze und sichert zum anderen die feste räumliche Zuordnung zwischen Schneidelement und Bohrerspitze, wobei ein satter Formschluß mit gleichmäßigem und definiertem Kraftfluß bereitgestellt wird.

Die nunmehr geringe axiale Erstreckung der Wechselplatte ermöglicht eine gemäß Anspruch 8 an die Schneidengeometrie optimal angepaßte Gestaltung der Rundfase und/oder der Nebenschneide.

Die Erfindung wird nunmehr anhand einer Ausführungsform unter Bezugnahme auf die Zeichnung näher erläutert. Es zeigen:

Fig. 1 eine Seitenansicht der erfindungsgemäßen Bohrerspitze;

Fig. 2 eine Ansicht einer Ausführungsform der Stirnseite der Bohrerspitze;

Fig. 3 eine Draufsicht auf die erfindungsgemäßen Schneidelemente, wobei ein Schneidelement durch eine durchgezogene Linie mit einem halbkreisförmigen und durch eine strichpunktierte Linie mit einem prismenförmigen Befestigungsabschnitt dargestellt ist,

Fig. 4 eine Seitenansicht der Schneidelemente mit runden Befestigungsabschnitten; und

Fig. 5 eine weitere Ausführungsform der Stirnseite der Bohrerspitze.

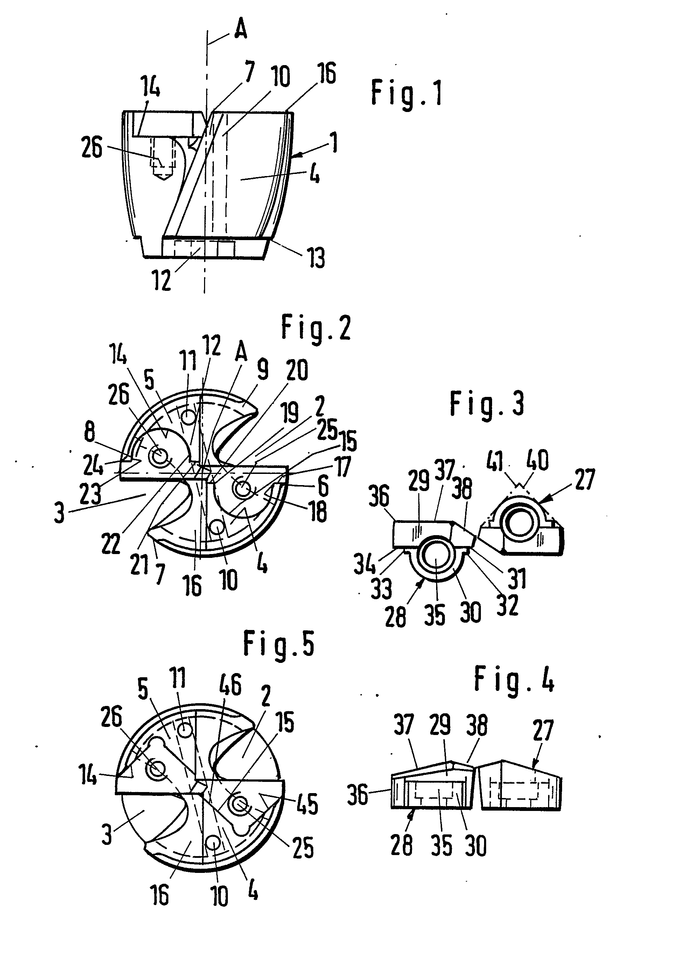

Die in den Figuren 1 und 2 dargestellte Bohrerspitze 1 gehört zu einem Spiralbohrer mit zwei Spannuten 2, 3, zwischen denen Bohrerstege 4, 5 ausgebildet sind. Die Bohrerstege 4, 5 sind an ihren die Spannuten 2, 3 begrenzenden Kanten mit Führungsfasen 6, 7, 8, 9 versehen, die den Spiralbohrer innerhalb des Bohrlochs zentrieren sollen. In den Bohrerstegen 4, 5 verlaufen Kühlkanäle 10, 11, die an eine Kanalquerverbindung 12 angeschlossen sind, die ihrerseits mit einer im nicht dargestellten Spiralteil bzw. Trägerteil ausgebildeten Kühlmittelversorgung in Verbindung steht. Durch die Kühlkanäle 10, 11, die außerhalb des Spiralbohrerkerns in den Bohrerstegen 4, 5 verlaufen, wird Kühlmittel auf die Bohrlochsohle gefördert. An ihrem an das Schneidteil anzuschließenden Ende ist die Bohrerspitze 1 mit einer längs dem Außenumfang der Bohrerstege 4, 5 verlaufenden Radialstufe 13 versehen, durch die eine Anbringung an das Spiralteil erleichtert und fester gestaltet wird.

Auf ihrer dem Bohrlochtiefsten zugewandten Stirnseite 16 ist die Bohrerspitze 1 mit zwei symmetrisch zur Bohrerachse A angeordneten Ausnehmungen 14, 15 ausgebildet. Diese Ausnehmungen 14, 15 verlaufen an ihrer an der vorlaufenden Kante des Bohrerstegs 4 bzw. 5 angeordneten Seite in Radialrichtung und erstrecken sich etwa über einen vollen Radius. An ihren nahe der Bohrerachse A, d.h. am Kern des Spiralbohrers angeordneten Abschnitten, gehen sie ineinander über. Von den Rückseiten dieser radial verlaufenden Teile der Ausnehmungen 14, 15 erstrecken sich weitere Ausnehmungsteile halbkreisförmig weiter in die von den Bohrerstegen 4, 5 gebildeten Abschnitte der Stirnseite 16 der Bohrerspitze 1, wobei die Krümmung der Begrenzungswände erst nach einem kurzen, geraden Ansatz beginnt. Der Durchmesser der halbkreisförmigen Ausnehmungsteile ist etwas kleiner als die Länge der Ausnehmungsteile, die längs den Vorlaufkanten der Bohrerstege 4, 5 verlaufen. Dadurch weist jede Ausnehmung 14, 15 zwei Ecken auf, die jeweils durch zwei ebene, parallel zur Bohrerachse A ausgerichtete Wandabschnitte 17, 18, 19, 20, 21, 22, 23, 24 gebildet werden. Etwa im Mittelabschnitt des Durchmessers des Halbkreises ist in jeder Ausnehmung 14, 15 eine Gewindebohrung 25, 26 ausgebildet.

In die Ausnehmungen 14, 15 sind Schneidelemente 27, 28 eingesetzt, die als Wechselplatten ausgebildet und in den Figuren 3 und 4 dargestellt sind. Die Wechselplatten 27, 28 weisen eine identische Gestalt auf, daher wird im folgenden lediglich die Wechselplatte 28 im Zusammenhang mit der dieser zugeordneten Ausnehmung 14 beschrieben. Die Wechselplatte 28 gliedert sich im wesentlichen in zwei Abschnitte:

-einen Schneidabschnitt 29 und
-einen Befestigungsabschnitt 30.

Der Schneidabschnitt 29 ist innerhalb der Ausnehmung 14 nahe der vorlaufenden Kante des Bohrerstegs 5 angeordnet, während der Befestigungsabschnitt 30 in dem in Drehrichtung des Spiralbohrers dahinter ausgebildeten, halbkreisförmigen Teil der Ausnehmung 14 sitzt. Auf ihrer an die Grundfläche der Ausnehmung 14 anliegenden Begrenzungsfläche ist die Wechselplatte 28 in ihrem Umriß ähnlich ausgebildet wie die Ausnehmung 14. Jedoch ist der Durchmesser des halbkreisförmigen Befestigungsabschnitts 30 etwas geringer als der des entsprechenden Teils der Ausnehmung 14, so daß die Wechselplatte 28 mit dem gekrümmten, halbzylindrischen Wandabschnitt ihres Befestigungsabschnitts 30 nicht an den diesem gegenüberliegenden Wandabschnitt der Ausnehmung 14 anliegt. Dadurch entfällt die Notwendigkeit, bei der Fertigung auf die Genauigkeit der Durchmesser der schwierig herzustellenden halbkreisförmigen Abschnitte sowohl der Ausnehmung 14 als auch des Befestigungsabschnitts 30 der Wechselplatte 28 zu achten. Die feste räumliche Anordnung der Wechselplatte 28 innerhalb der Ausnehmung 14 wird durch ebene, parallel zur Bohrerachse A orientierte Passungsflächen 31, 32, 33, 34 erreicht, die sich in unmittelbarer Anlage mit den entsprechend ausgebildeten Wandabschnitten 21, 22, 23, 24 der Ausnehmung 14 befinden. An dem in dem halbkreisförmigen Teil der Ausnehmung 14 einragenden Teil des Befestigungsabschnitts 30 ist die Dicke der Wechselplatte 28 derart bemessen, daß sie mit dem vom Bohrersteg 5 gebildeten Abschnitt der Stirnseite 16 der Bohrerspitze 1 fluchtet. Des weiteren ist im Befestigungsabschnitt 30 eine durchgehende Bohrung 35 ausgebildet, die derart angeordnet ist, daß sie bei Anlageberührung zwischen den Passungsflächen 31, 32, 33, 34 und den Wandabschnitten 21, 22, 23, 24 mit der in der Grundseite der Ausnehmung 14 ausgebildeten Gewindebohrung 26 fluchtet. Die Wechselplatte 28 wird mittels einer Schraube, die die Bohrung 35 durchgreift und in die Gewindebohrung 26 eingeschraubt wird, in der Ausnehmung 14 befestigt. Demgemäß ist die Wechselplatte 28 sowohl in Axial-als auch in Radialrichtung des Spiralbohrers in einer festen räumlichen Zuordnung zur Bohrerspitze 1 fixiert.

Der Befestigungsabschnitt 30 kann auch, wie in Fig. 3 bei der Wechselplatte dargestellt, prismenförmig mit Passungsflächen 40, 41 ausgebildet sein. Für derartige Wechselplatten 27 ist die Stirnseite 16 der Bohrerspitze wie in Fig. 5 dargstellt, mit entsprechenden Wandabschnitten 45, 46 ausgebildet.

Der Schneidabschnitt 29 der Wechselplatte 28 ist an seinem am Umfang der Bohrerspitze 1 angeordneten Seiten abschnitt so angeschliffen, daß er die Führungsfase 8 der Bohrerspitze 1 in Richtung auf die Bohrlochsohle verlängert. Dadurch wird eine bessere Führung des Spiralbohrers innerhalb des Bohrlochs und eine exakte Selbstzentrierung erreicht. Des weiteren ist die etwa parallel zur Bohrerachse A verlaufenden äußere Vorderkante dieses Teils der Wechselplatte 28 derart angeschliffen, daß sie eine die der Bohrerspitze 1 verlängernde Nebenschneide 36 ausbildet. Die - in Drehrichtung des Spiralbohrers gesehen - untere Vorderkante der Wechselplatte 28 bildet in ihrem vom Umfang bis etwa zum Außenrand des Bohrerkerns laufenden Hauptabschnitt eine Hauptschneide 37 der Bohrerspitze 1. Die Hauptschneide 37 ist derart geneigt, daß sie an ihrem bohrerkernseitigen Endabschnitt in Richtung auf die Bohrlochsohle vorsteht. Etwa am Außenumfang des Bohrerkerns endet die Hauptschneide 37 und beginnt eine Querschneide 38, die vom inneren Ende der Hauptschneide 37 etwa auf den Mittelpunkt des Bohrerkerns gerichtet ist und bezüglich einer Radialebene des Spiralbohrers derart geneigt ist, daß sie mit der Hauptschneide 37 eine in Richtung auf die Bohrlochsohle vorstehende Spitze ausbildet. Die Querschneide 38 fluchtet in einer Querschnittsebene der Bohrerspitze 1 etwa mit der entsprechenden, an der anderen Wechselplatte ausgebildeten Querschneide. Die Querschneide 38 bildet mit der Hauptschneide 37 eine Spitze aus, die in Richtung auf die Bohrlochsohle und - in Richtung des Spiralbohrers gesehen - nach vorne vorsteht.

Die Passungsflächen 31 und 34 der Wechselplatte 28 müssen, sowie die Passungsflächen 21 und 24 der Ausnehmung, nicht miteinander fluchten. Des weiteren kann der Befestigungsabschnitt der Wechselplatte 28 auch anders als halbkreisförmig ausgebildet sein. Die Gewindebohrungen in den Bohrerstegen können etwas - in Drehrichtung des Spiralbohrers gesehen - nach hinten versetzt oder angeschrägt sein, um eine satte Anlage zwischen den Passungsflächen 31 und 21 bzw. 34 und 24 zu sichern.

**Ansprüche**

1. Zwei-oder mehrschneidiges Bohrwerkzeug mit austauschbaren Schneidelementen, die mittels Schrauben in in der Bohrerspitze entsprechend ausgebildeten Ausnehmungen befestigt sind, dadurch gekennzeichnet, daß die Schneidelemente (27, 28) als Wechselplatten ausgebildet sind, die in Schneidrichtung hinter der Hauptschneide (37) mit Befestigungsabschnitten (30) versehen sind, durch die hindurch die Schrauben mit in der Stirnseite (16) der Bohrerspitze (1) ausgebildeten Gewindebohrungen (25, 26) in Eingriff sind.

2. Bohrwerkzeug nach Anspruch 1, dadurch gekennzeichnet, daß die Schneidelemente (27, 28) identisch gestaltet sind.

3. Bohrwerkzeug nach Anspruch 1 oder 2, dadurch gekennzeichnet, daß die Befestigungsabschnitte (30) und die sie aufnehmenden Teile der Ausnehmung (14, 15) halbkreisförmig ausgebildet sind.

4. Bohrwerkzeug nach Anspruch 1 oder 2, dadurch gekennzeichnet, daß die Befestigungsabschnitte (30) und die sie aufnehmenden Teile der Ausnehmung (14, 15) prismenartig ausgebildet sind.

5. Bohrwerkzeug nach einem der Ansprüche 1 bis 4, dadurch gekennzeichnet, daß die Schneidelemente (27, 28) mit im wesentlichen parallel zur Bohrerachse (A) ausgebildeten ebenen Passungsflächen (31, 32, 33, 34 40, 41) versehen sind, die im eingebauten Zustand flächig an entsprechend gestalteten Wandabschnitten (17, 18, 19, 20, 21, 22, 23, 24; 45, 46) der Ausnehmungen (14, 15) anliegen.

6. Bohrwerkzeug nach Anspruch 3 oder 5, dadurch gekennzeichnet, daß die Ansätze (18, 19, 20, 23) des halbkreisförmigen Teils der Ausnehmung (14) parallel zur Bohrerachse (A) ausgebildete, ebene Passungsflächen sind.

7. Bohrwerkzeug nach einem der Ansprüche 4 bis 6, dadurch gekennzeichnet, daß aneinander angrenzde Passungflächen (17, 18; 19, 20; 21, 22; 23, 24 bzw. 31, 32; 33, 34 oder 40, 41 bzw. 45, 46) aufeinander senkrecht stehen.

8. Bohrwerkzeug nach einem der Ansprüche 1 bis 6, dadurch gekennzeichnet, daß die Wechselplatte (28) rundgeschliffen ist und/oder einen Nebenschneidenabschnitt (36) ausgebildet.

Fig.1

Fig.2

Fig.3

Fig.5

Fig.4